# EUROPEAN PATENT APPLICATION

(11) **EP 1 018 588 A1**
(43) Date of publication of application: **12.07.2000**
(21) Application number: 99310507.1
(22) Date of filing: 23.12.1999
(51) Int. Cl.: E05B 65/12, E05C 19/02, B60K 15/05

(54) **A door securing assembly**

(30) Priority: 06.01.1999 GB 9900114
(71) Applicant: ROVER GROUP LIMITED, Warwick, Warwickshire CV34 6RG (GB)
(72) Inventor: Halliwell, Martin Charles, Wheatley, Oxford OX33 1NW (GB)

(57) **Abstract**

A door securing assembly is provided utilising a push-push lock 10 which has a latching member 12 securable in a locked state by a locking means 41, 42, 43. The latching member 12 is moveable between a retracted position in which it retains a door 7 in a closed position and an extended position in which it presents an edge of the door 7 in an upstanding position so as to allow it to be grasped by a user.

## Description

This invention relates to a motor vehicle and in particular to a door securing assembly for securing a door of a compartment in a closed position.

It is well known to provide a motor vehicle with a compartment housing the fuel filler having a covering door to obscure the fuel filler from view during normal use. It is similarly known to provide a storage box or glovebox in a motor vehicle having a door that is securable in a closed position.

In both cases it is desirable to have the outer surface of the door free of protrusions and encumbrances such as key locks or finger operated latches. This is for both aesthetic reasons and to maintain a smooth surface that has, in the case of the fuel filler, better aerodynamic properties and, in the case of the glovebox, improved safety characteristics.

It is a object of this invention to provide an improved door securing assembly for such uses.

According to the invention there is provided a door securing assembly for securing in a closed position a door forming part of a compartment, the compartment being defined by a housing to which the door is hingedly connected for movement between an open position in which access to the compartment is provided and said closed position in which access to the compartment is prevented, the door securing assembly comprising a push-push lock secured to the housing, the push-push lock having a latching member for engagement with a latching means on the door, the latching member being movable between a retracted position in which it retains the door in a closed position and an extended position in which an edge of the door is positioned in an upstanding position to allow it to be grasped by a user wherein the push-push lock includes a locking means to retain the latching member in said retracted position.

The locking means may retain the latching member in engagement with the latching means when it is engaged.

The locking means may be movable between an engaged and a disengaged position by a motor.

The latching member may be axially movable against the action of a spring from the retracted position to a further retracted position to release it from the retracted position and is axially movable against the action of the spring to the further retracted position from the extended position to return the latching member to the retracted position.

The locking means may prevent movement of the latching member from the retracted position to said further retracted position. The latching member may be rotatable for engagement with the latch means.

The latching member may be movable between an extended position and a retracted position against the action of a spring.

The latching member may have at least one guide means for engagement with a track formed in a cam member to cause rotation of the latching member during movement between said extended and retracted positions.

The door may be a door for a fuel filler compartment.

The invention will now be described by way of example with reference to the accompanying drawing in which:-
Figure 1 is a cross-section through a door securing assembly in a first position;
Figure 2 is a cross-section similar to that of Figure 1 but showing the door securing assembly in a second position;
Figure 3 is a cross-section similar to that of Figure 1 showing the door securing assembly in a third position;
Figure 4 is a cross-section through a push-push lock forming part of a door securing assembly according to the invention;
Figure 5 is a view in the direction of arrow X on Figure 4;
Figure 6 is a cross-section on the line A-A on Figure 4;
Figure 7 is a scrap view of an alternative latch means for use in a door securing assembly according to the invention;
Figure 8 is a cross-section through a second embodiment of a door securing assembly according to the invention;
Figure 9 is a scrap pictorial view of part of the door securing assembly shown in Figure 8;
Figure 10 is a view similar to Figure 2 but showing a third embodiment of the invention; and
Figure 11 is a view similar to Figure 1 but showing a third embodiment of the invention.

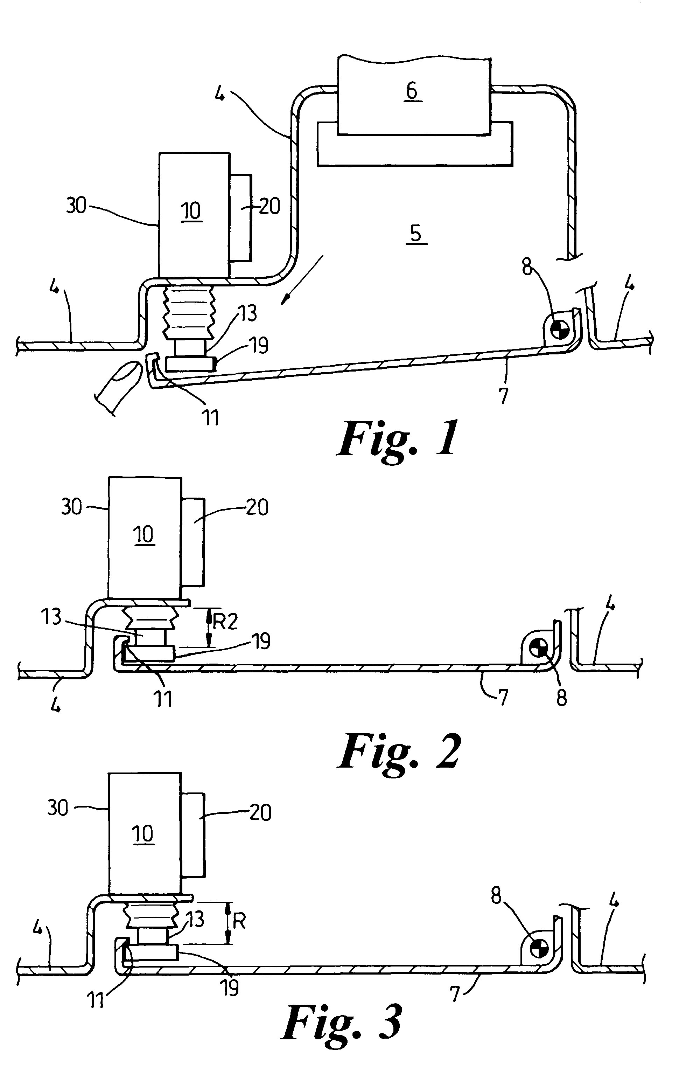

With reference to Figures 1 to 6 there is shown a compartment 5 defined by a housing 4 for housing a fuel filler 6. A door 7 is pivotally connected to the housing 4 by means of a pivot pin 8.

The door 7 is movable between a closed position, as shown in Figure 3, in which it lies substantially flush to the surrounding housing 4 and prevents access to the compartment 5 and an open position (not shown) in which the door 7 permits full access to the compartment 5.

A door securing assembly is provided to secure the door 7 in the closed position. The door securing assembly comprises a push-push lock assembly 10 and a latching means 11 on the door 7.

The latching means is in the form of an inturned lip of the door 7 and is arranged for co-operation with a latching member 12 forming part of the push-push lock 10.

The push-push lock 10 comprises a tee-shaped latching member 12 secured in a sleeve 13 by means of an annular ring 16 engaged in a recess 15 formed in a bore 17 in the sleeve 13. The annular ring 16 is formed upon a shaft portion 18 of the latching member 12 which in combination with a head portion 19 forms the latching member 12. The shaft portion 18 has a portion defining a gearform 14 used to rotate the latching member 12.

The sleeve 13 is slidingly engaged in a tubular housing 30 and has a number of radially outwardly extending teeth 31 formed thereon for engagement with corresponding recesses 32 formed in a bore 33 of the tubular housing 30. The recesses 32 are separated from one another by lands 34 against which the teeth 31 can abut.

An end cap 35 is threadingly engaged with one end of the tubular housing 30 to form a spring chamber 36 in which is located a spring 37. The spring 27 is interposed between the end cap 35 and an annular end face 38 of the sleeve 13.

The spring 37 is operable to bias the teeth 31 against the lands 34 or into the recesses 32.

The shaft portion 18 has a rod-like extension 40 which is cross-drilled to except a locking pin 41. The extension 40 is engageable with a tubular extension 42 of the end cap 35. The tubular extension 42 has two diametrically opposed slots 43 for co-operation with the locking pin 41.

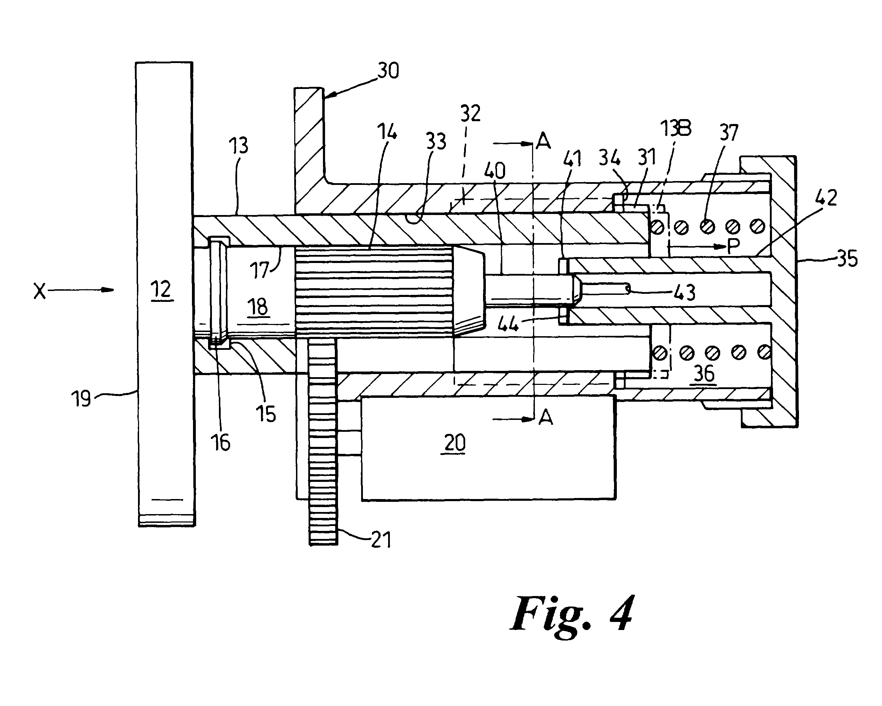

The extension 40, locking pin 41, tubular extension 42 and the slots 43 form a locking means to prevent the latching member 12 from being moved from a retracted position as shown in Figure 4.

Movement of the latching member 12 from the locked to the unlocked state is effected by an electric motor 20 which is drivingly connected to the shaft portion 18 of the latching member 12 by a gearwheel 21 that is engaged with the gearform 14 on the shaft portion 18.

Operation is as follows. In the locked state as shown in Figure 4 the sleeve 13 is in a retracted position and the teeth 31 are resting upon the lands 34. Movement of the sleeve 13 in the direction of arrow P is not possible because of the abutment of the locking pin 41 with an end surface 44 of the tubular extension 42.

Operation of the electric motor 20 causes the latching member 12 to be rotated by the inter action between the gearwheel 21 and the gearform 14. This allows the locking pin 41 to align with the slots 43 in the tubular extension 42. In this position movement of the sleeve 13 in the direction of arrow P is only prevented by the biasing effect of the spring 37 and the latching member 12 is therefore free to move.

Rotation of the latching member 12 from the locked state to the unlocked state is accompanied by rotation of the head 19 reducing its engagement with the latching means 11 on the door 7.

In the unlocked state the sleeve 13 is free to move against the action of the spring 37 and by applying a pressure in the direction of arrow P the sleeve 13 can be moved to a further retracted state as shown in Figure 2 and by the dotted outline 13B on Figure 4. In this position the sleeve 13 is free to rotate with respect to the tubular housing 30 because the teeth 31 are disengaged from the lands 34. Upon releasing the sleeve 13 from the further retracted position the spring 37 urges the teeth 31 into engagement with the recesses 32.

In the further retracted state the distance R2 as shown on Figure 2 between the rear face of the head 19 and the tubular housing 30 is less than the distance R between these components when in the normal retracted position.

Alignment of the teeth 31 with the recesses 32 allows the sleeve 13 to slide relative to the tubular housing 30 into an extended position as shown in Figure 1. In this position it is relatively easy for an exposed edge of the presented door 7 to be grasped by a user to open the door 7.

To close the door 7 it is merely pushed shut causing the latching member 12 to be urged back into the further retracted position. When the pressure on the door 7 is then released the spring 37 will cause the teeth 31 to become re-engaged with the lands 34 thereby retaining the latching member 12 in the retracted position.

Operation of the electric motor will then cause the shaft portion 18 to be rotated thereby re-engaging the locking pin 41 with the end surface 44 of the tubular extension 42.

When the latching member 12 is in the retracted position the latching means 11 is lightly engaged with the head 19 of the latch member 12 thereby preventing the door 7 from moving from a closed position but when the latch member 12 is rotated to the locked position the asymmetry of the head 19 causes it to be further engaged with the latching means 11 thereby firmly securing the door 7.

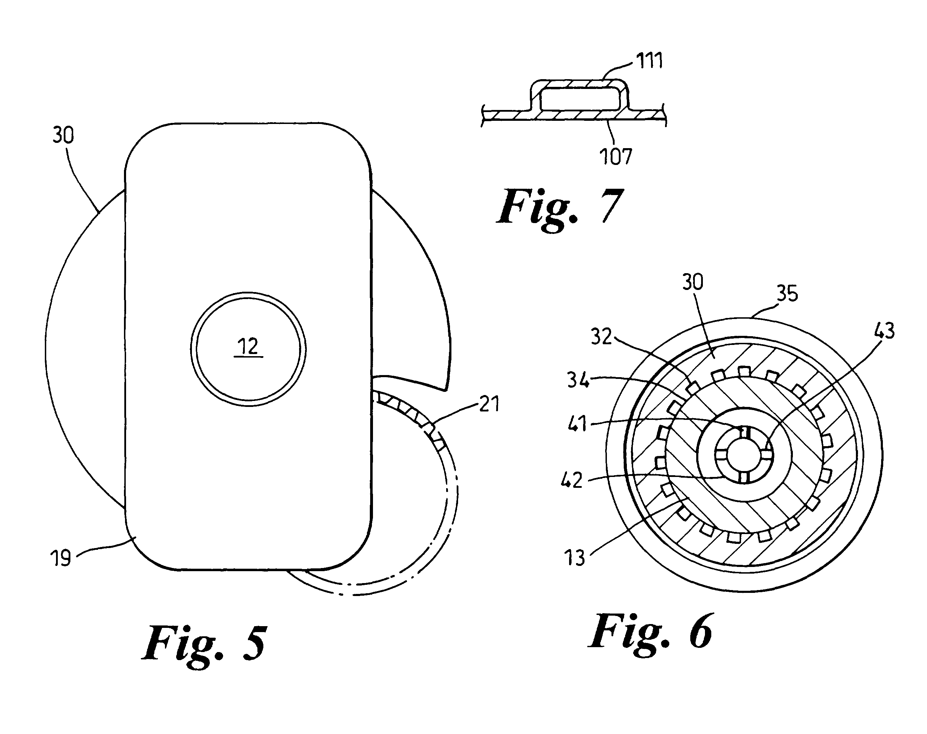

In Figure 7 there is shown an alternative form of latching means. A loop 111 is provided on the inside of the door 107 for co-operation with the latching member 12.

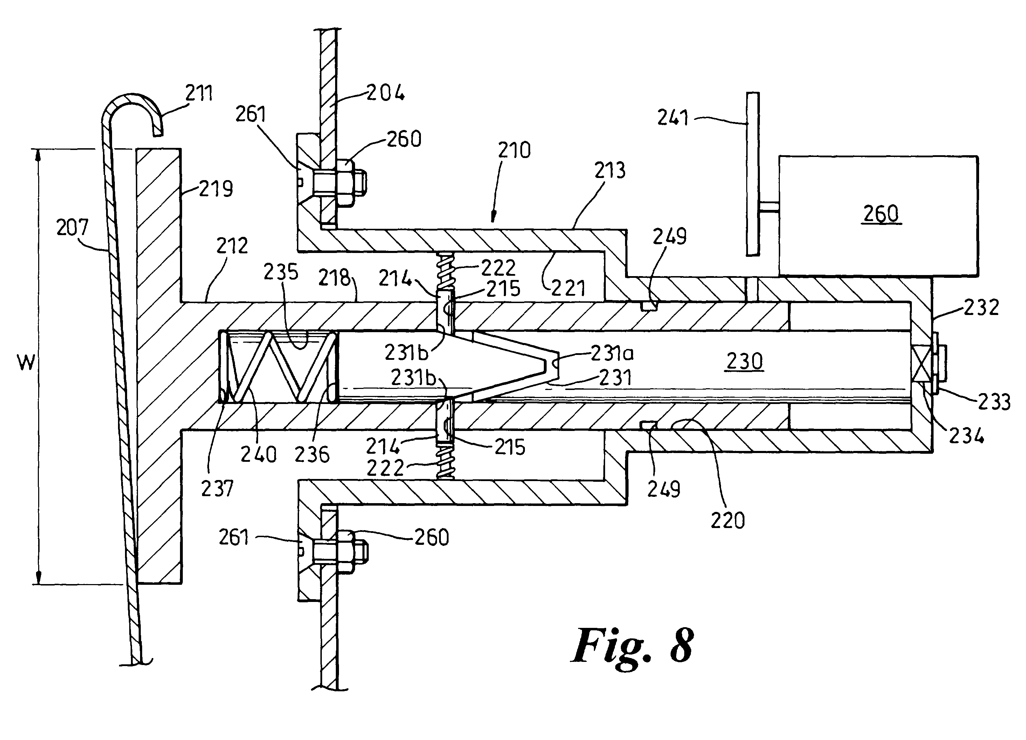

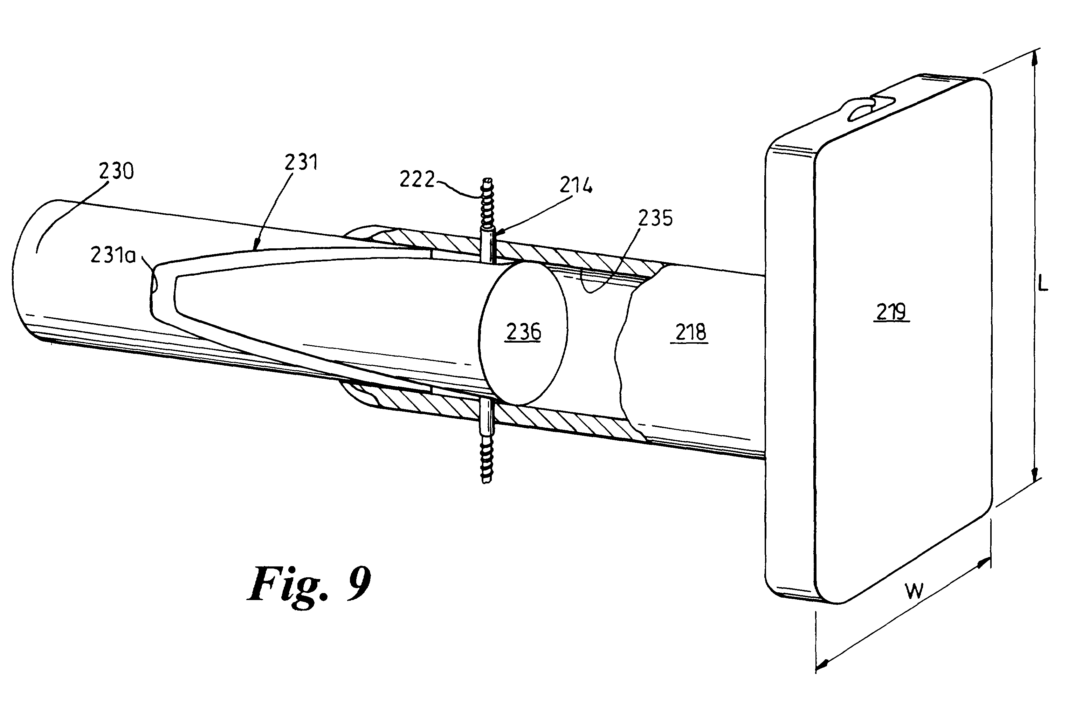

With reference to Figures 8 and 9 there is shown part of a fuel filler compartment in the form of a housing 204. A door 207 is pivotally connected to the housing 204 by means of a hinge mechanism (not shown).

The door is movable between a closed position in which it lies substantially flush to the surrounding housing 204 and an open position in which the door 207 permits full access to the compartment.

A door securing assembly is provided to secure the door 207 in the closed position. The door securing assembly comprises a push-push lock assembly 210 and a latching means 211 on the door 207. The latching means 211 is in the form of an inturned lip of the door 207 and is arranged for co-operation with a latching member 212 forming part of the push-push lock 210.

The push-push lock 210 comprises the "T" shaped latching member 212 supported by a tubular housing 213. The latching member 212 has a tubular shaft portion 218 and rectangular head portion 219 of width "W" and length "L".

The tubular shaft portion 218 has a pair of diametrically opposed apertures 215 each of which is used to support a guide means in the form of a spring biased pin 214 used to rotate the latching member 212 as will be explained hereinafter.

The tubular shaft portion 218 has a circumferentially extending groove 249 for co-operation with a locking member 241.

The tubular housing 213 is secured to the housing 204 by a number of threaded fasteners in the form of nuts 260 and screws 261. The tubular housing 213 has a stepped bore defining two cylindrical portions 220, 221.

The first cylindrical portion 220 is used to slidingly support the tubular shaft portion 218 and the second cylindrical portion 221 is used to form an abutment surface for the springs 222 used to bias the pins 214 into engagement with a cam member 230.

The cam member 230 has a guide track 231 formed in it for co-operation with the pins 214 and is secured to an end wall 232 of the tubular housing 213 by means of a circlip 233.

The cam member 230 has a square-shaped lug 234 for engagement with a complimentary aperture in the end wall 232 of the tubular housing 213 so as to prevent rotation of the cam member 230 relative to the tubular housing 213.

The cam member 230 is slidingly engaged within a bore 235 in the tubular shaft portion 218 of the latching member 212. A helical spring 240 is interposed between an end face 236 of the cam member 230 and an end face 237 of the bore 235 so as to bias the latching member 212 away from the housing 204.

Movement of the latching member 212 towards and away from the housing 204 will cause rotation of the latching member 212 due to the inter-engagement of the pins 214 with the angled track 231.

The track 231 has four lands 231a, 231b corresponding to the innermost and outermost positions of travel of the latching member 212.

Movement of the latching member 212 into and out of engagement with these lands 231a, 231b will result in a 90° rotation of the head 219.

When the latching member is in its innermost position the head 219 is orientated so that it engages with the inturned lip 211 defining a latching means for the door 207. The door 207 is thereby held closed by the latching member 212. When the latching member 212 is in its outermost position (as shown in Figure 8) the head 219 is not engaged with the lip 211 and so the door 207 is free to open.

To hold the door in its closed position the locking member 241 is brought into engagement with the circumferentially extending groove 249 in the tubular shaft portion 218 by a servo motor 260.

The engagement of the locking member 241 with the groove 249 prevents axial sliding of the latching member 212 and therefore traps the latching member 212 in its innermost position.

Although the locking member 241 described above is moved by a servo motor into and out of engagement with the latching member 214 it will be appreciated that a mechanically operable latching member could be used to effect this function.

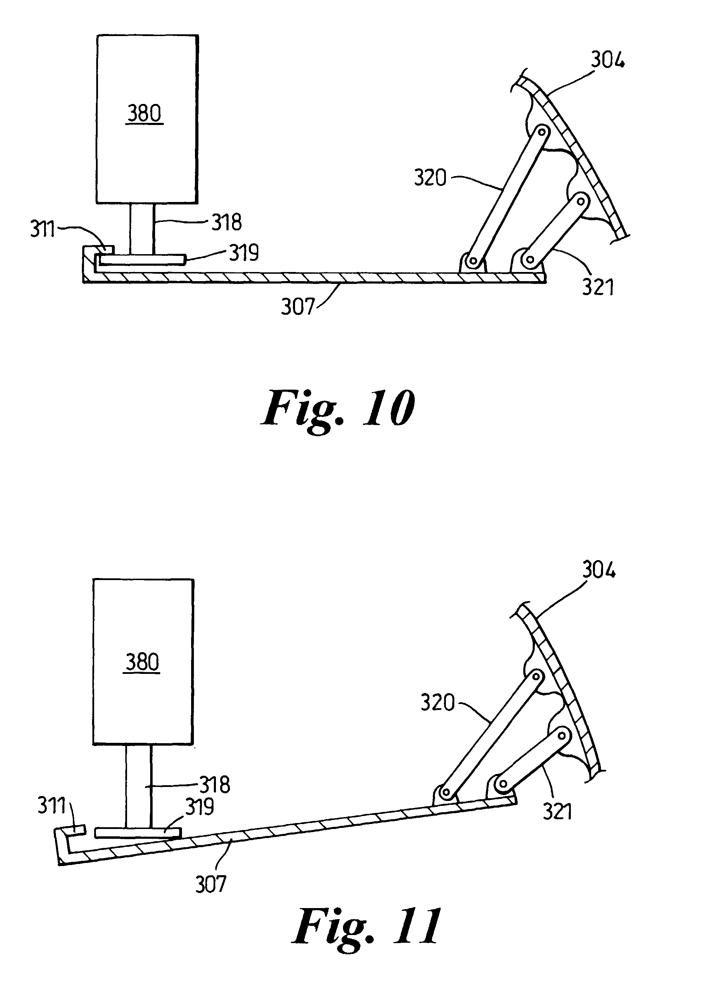

With reference to Figures 10 and 11 there is shown a fourth embodiment of the invention which comprises a lockable push-push latching means 380 having an outwardly extending latching member 318 supporting a disc-shaped head 319.

A door or cover 307 is pivotally connected to a housing 304 by a pair of spaced apart arms 320, 321.

The door 307 has an inturned lip 311 forming a latching means for co-operation with the head 319 so as to secure the door in a closed position (as shown in Figure 10).

Unlike the embodiments previously described, dis-engagement of the head 319 from the inturned lip 311 is produced by a lateral displacement of the door 307 caused by the arrangement of the arms 320, 321 and not by rotated of the head 319.

This permits the use of a push-push latching means that does not produce rotary motion of the head 319.

Although the invention has been described with particular reference to fuel filler compartment it will be appreciated that such a securing means could be used to secure other non-structural doors such as glovebox lids or lockable storage boxes.

## Claims

1. A door securing assembly for securing in a closed position a door forming part (7;207) of a compartment (5), the compartment (5) being defined by a housing (4;204) to which the door forming part (7;207) is hingedly connected for movement between an open position in which access to the compartment (5) is provided and said closed position in which access to the compartment (5) is prevented, the door securing assembly comprising a push-push lock (10;210) secured to the housing (4;204), the push-push lock (10;210) having a latching member (12;212) for engagement with a latching means (11;211) on the door forming part (7;207), the latching member (12;212) being moveable between a retracted position and an extended position characterised in that an edge of the door forming part (7;207) is positioned in an upstanding position to allow it to be grasped by a user characterised in that the push-push lock (10;210) further includes a locking means (40,41,42,43;241) to retain the latching member (12;212) in said retracted position.

2. A door securing assembly as claimed in Claim 1 characterised in that the locking means (40,41,42,43;241) retains the latching member (12;212) in engagement with the latching means (11;211) when it is engaged.

3. A door securing assembly as claims in Claim 1 or in Claim 2 characterised in that the locking means (40,41,42,43;241) is moveable between an engaged and a disengaged position by a motor (20).

4. A door securing assembly as claimed in any preceding claim characterised in that the latching member (12;212) is axially moveable against the action of a spring (37;237) from the retracted position to a further retracted position to release it from the retracted position and is axially moveable against the action of the spring (37;237) to the further retracted position from the extended position to return the latching member (12;237) to the retracted position.

5. A door securing assembly as claimed in Claim 4 characterised in that the locking means (40,41,42,43;241) prevents movement of the latching member (12;212) from the retracted position to said further retracted position.

6. A door securing assembly as claimed in any preceding claim characterised in that the latching member (12;212) is rotatable for engagement with the latching means (11;211).

7. A door securing assembly as claimed in any of Claims 1 to 3 characterised in that the latching member (212) is movable between an extended position and a retracted position against the action of the spring (237).

8. A door securing assembly as claimed in Claim 7 characterised in that the latching member (212) has at least one guide means (214) for engagement with a track (231) formed in a cam (230) member to cause rotation of the latching member (212) during movement between said extended and retracted positions.

9. A door securing assembly as claimed in any preceding claim characterised in that the door forming part (7;207) is a door for a fuel filler compartment.
